# EUROPEAN PATENT APPLICATION

(11) **EP 3 309 946 A1**
(43) Date of publication of application: **18.04.2018**
(21) Application number: 16810690.4
(22) Date of filing: 31.03.2016
(51) Int. Cl.: H02K 53/00

(54) **DISC TYPE MAGNETISM INCREASING DC GENERATOR**

(30) Priority: 15.06.2015 CN 201510324790
(71) Applicant: Xu, Zhankui, Shenyang, Liaoning 110006 (CN)
(72) Inventor: Xu, Zhankui, Shenyang, Liaoning 110006 (CN)
(74) Representative: Vitina, Maruta
(86) International application number: PCT/CN2016/000177
(87) International publication number: WO 2016/201949

(57) **Abstract**

A disc type magnetism increasing DC generator is a pure magnetic energy DC generator consisting of a drive motor (2), a DC generator (1), and a disc brush conductive output apparatus (3); the stator of the DC generator consists of a permanent magnet magnetic disc (5) and a magnetism increasing coil (9) casing; the rotor consists of a power generation disc (6), an axis (10) and a conductive terminal in the axis; the drive motor and the DC generator operate coaxially; the power generation disc rotor cuts magnetic lines and generates electricity, when the motor is energized and rotates, and a current is generated when the electrical equipment costumes electricity, the current passes through the magnetism increasing coil, and the magnetism increasing coil generates magnetic potential, thereby enhancing magnetic field strength of magnetic source of the DC generator, increasing magnetic flux, and raising output power of the DC generator; magnetic energy and power generation energy of the DC generator are much greater than magnetic energy and power consumption energy of the drive motor; electric power outputted by the DC generator is much greater than electric power consumed by the drive motor.

## Description

### Technical Field

Pure magnetic energy DC generator that can meet electricity demand for industries, agriculture, for civil use and transportation.

### Background Technology

Nuclear power generation, hydroelectric generation, thermal power generation and other power generation methods depend on energy sources; they consume energy sources and pollute the environment, due to which their usage is inconvenient; at present, there is no pure magnetic energy DC generator.

### Invention Contents

The disc type magnetism increasing DC generator is a pure magnetic energy DC generator composed of a drive motor and DC generator, as well as a disc brush conductive output device, and is a high energy and high quality DC generator; as the DC generator's magnetic energy and power generation are much greater than the drive motor's magnetic energy and power consumption, the output power of the DC generator is much greater than the power consumed by the drive motor; after the disc type magnetism increasing DC generator is started, it can operate by using the power it has generated, rather than using any other fuel or other power sources.

Theory: The disc type magnetism increasing DC generator is composed of three parts; (1) DC generator stator: A fixed permanent magnetic source formed by a permanent magnetic disc and ceramic structural insulation gasket, which is separated from the generator disc in layers, with a coil casing; the direction of the magnetic field is the same; [Casing coil (magnetism increasing coil) is similar to a coil wound with aluminum strips or copper strips (wire), while the ceramic structural insulation is cast into the casing]; rotor: It is composed of a generator disc, [(the generator disc is an aluminum alloy generator disc connected to a copper alloy conductive ring, the conductive ring is connected to the insulation bus, and there is a positive connecting terminal on the insulation bus, whereas, there is a negative connecting terminal on the aluminum alloy generator disc) the aluminum alloy generator disc rotates and cuts the magnetic line of force, thus generating current, the current enters the insulation bus by passing the conductive ring, and then enters the next generator disc's negative connecting terminal from the positive terminal] and a ceramic structural insulation disc holder, which is separated from the permanent magnetic disc in layers, and is placed on the non-magnetic hollow conductive metal shaft (with conductive terminals inside the shaft), composing the generator disc rotor in the DC generator; the positive terminal of the generator disc is connected to the negative terminal of the next generator disc; these form a series circuit for power generation in the generator disc; the positive terminal of the last generator disc is connected to the conductive terminal inside the shaft; the conductive terminal inside the shaft is connected to the disc brush conductive output device, outputting the positive power of the generator; it is connected to the input terminal of the casing coil, so that its output terminal can output positive direct current; the negative terminal of the generator disc at the bottom is connected to the non-magnetic conductive metal disc holder at the bottom; the non-magnetic conductive metal disc holder is connected to the shaft; the shaft is connected to the disc brush conductive output device, outputting negative power of the generator; (2) The drive motor (the drive motor is a separate structure), the rotor and the generator disc rotor share the same shaft; the bearing bush and the stator are installed on the DC generator end cap; (3) Disc brush conductive output device: There is a positive output device and a negative output device inside; it is composed of a conductive disc (The conductive disc is equipped with a conductive friction disk), electric brush, conductive brush disc holder and a fan; it is installed on the generator shaft head; the positive conductive disc is connected to the conductive terminal inside the shaft; the negative conductive disc is connected to the shaft; when the drive motor rotates after it is electrified, the generator disc cuts the corresponding magnetic line of force and generates current, whereas the current reaches the negative terminal of the next generator disc after passing the conductive ring and the insulation bus; the generated current is output from the series circuit, after passing the conductive terminal inside the shaft and the disc brush conductive output device; it then enters the input terminal of the casing coil, and its output terminal outputs direct current; the positive power output terminal of the casing coil and the negative power output terminal of the disc brush conductive output device, are connected to the electrical equipment; when the electrical equipment consumes power, it generates current; when the current passes the casing coil, it generates magnetic potential; the magnetic potential is added to the DC generator's magnetic source, enhancing its magnetic field strength and enlarging the magnetic flux, thus increasing the power generated by the DC generator; such a coil in a casing-based magnetism increasing method is called (self increasing); the casing coil-based magnetism increasing current can also be separated from the current of the electrical equipment; a magnetism increasing current can be specially set for the magnetism increasing coil; such a magnetism increasing method is called (other increasing); the electricity derived from the DC generator can be directly applied on electrical equipment; if the above two magnetism increasing methods are applied in one generator, it is called (compound increasing); irrespective of the power consumption of the drive motor in the disc type magnetism increasing DC generator, the power consumption of the magnetism increasing coil, and the power consumption by other power supplies, or the power generated by its own generator, shall all be in front of the motor and the magnetism increasing coil; control devices can be installed to adjust the number of revolutions of the generator, V=Blu [V], and by adjusting the magnetism increasing coil turns or current, the magnetic potential = coil turns x current (A); a two-way adjustment can meet requirements of various electrical equipment.
(1) The thinner the permanent magnetic disc of the disc type magnetism increasing DC generator, the stronger and better magnetic field strength; it depends on the permanent magnetic disc's magnetic field strength and work requirements; the thickness of the aluminum alloy generator disc shall be determined based on the strength of the magnetic field in the two permanent magnetic discs.
(2) The vertical disc type magnetism increasing DC generator base is equipped with three access holes, and the bearing at the bottom of the mid and small size DC generators can be taken out for repair; people can enter large size DC generators to repair them.
(3) While installing the generator disc, it shall be rotated at a 90° angle between layers; the angle mounting connection helps ensure dynamic balance.
(4) The bearing bush is equipped with screw holes; to replace the bearing, push out the bearing bush with a fastening screw.
(5) It is to be noted that for the disc type magnetism increasing DC generator, except for the permanent magnetic disc and magnetic materials required for the drive motor, all other materials shall be non-magnetic.

### Beneficial Effect

The disc type magnetism increasing DC generator is small in size, lightweight and generates large amount of power, and can come in numerous models and specifications; it can meet electricity demand in industry, agriculture, for civil use, aircrafts, ships, automobiles and various transportation modes.

The disc type magnetism increasing DC generator is convenient to use and maintain; the generator has a fully sealed structure that doesn't require maintenance, and the bearing and electric brush located outside the generator only require period replacement.

Direct current is a high energy universal power supply system; DC electrical equipment are small in size, have quick response, low noise, long life and stable performance; at present, DC is used much more than AC; using the disc type magnetism increasing DC generator is as convenient as using a mobile DC power supply, which can be installed anywhere.

The use of disc type magnetism increasing DC generator and the use of direct current, is financially viable, keeps the environment clean and is a stable system; the unparalleled excellent performance of the disc type magnetism increasing DC generator can enhance development.

### Instructions on attached figures.

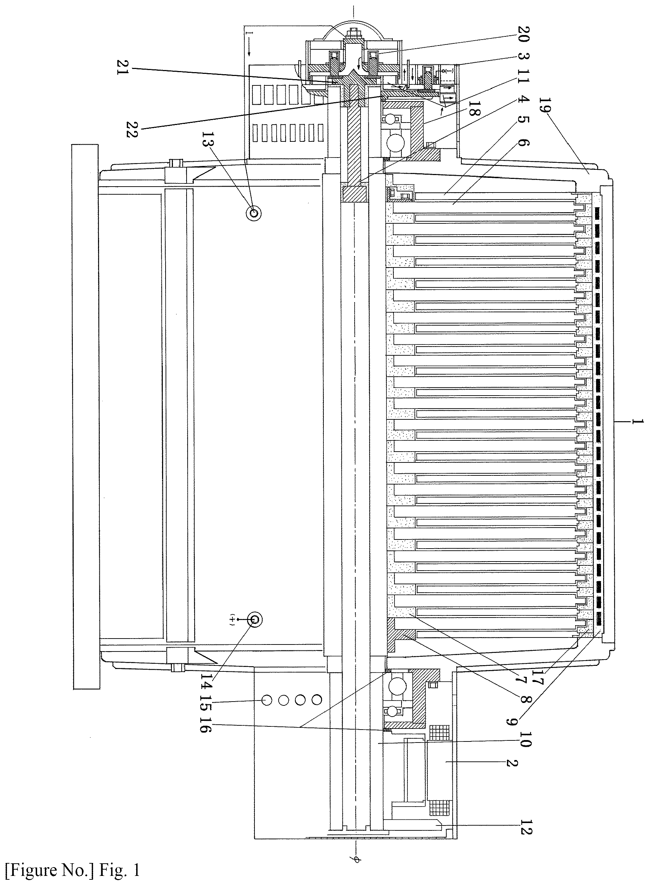

Fig. 1: [Horizontal] Disc type Magnetism increasing DC Generator: (1) DC generator; (2) Drive motor; (3) Disc brush conductive output device; (4) Conductive terminal inside the shaft; (5) Permanent magnetic disc; (6) Generator disc; (7) Ceramic structural insulation disc holder; (8) Non-magnetic conductive disc holder; (9) Casing with insulated magnetism increasing coil; both ends of the coil have connecting terminals; (10) Generator shaft (non-magnetic hollow conductive metal shaft, with conductive terminal inside the shaft); (11) Fans; there are three fans in all, namely the positive fan, negative fan and motor fan; the positive fan is fixed onto the shaft head; the negative fan and the motor fan are fixed on the conductive disc connecting to the shaft; (12) Exhaust fan; (13) Casing coil input terminal; (14) Casing coil output terminal; (15) Air inlet; (16) Seal gasket; (17) Ceramic structural insulation gasket; (18) Bearing bush; (there is a deep groove bearing and thrust bearing inside, with the bearing bush fixed on the generator end cap; there are screw holes for the fastening screws; while replacing the bearing, install the fastening screw on the screw hole, push out the bearing bush and replace the bearing); (19) Non-magnetic metal end cap; (20) Electric brush; (21) Positive conductive disc; (22) Negative conductive disc.

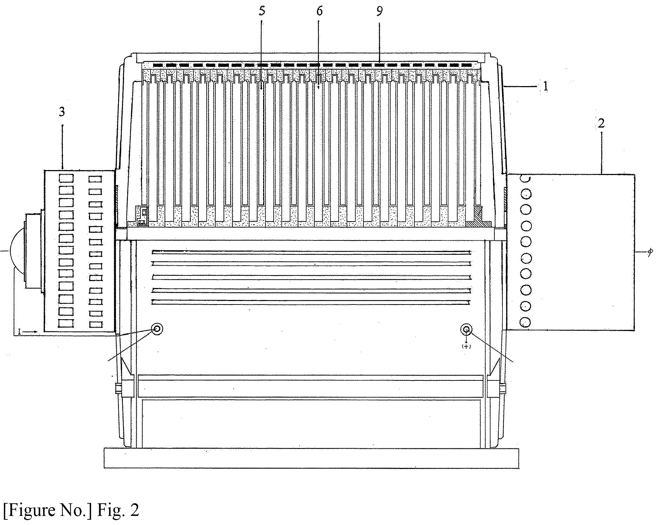

Fig. 2: Disc type Magnetism increasing DC Generator Fig. 1 Summary Structural Diagram; (1) DC generator; (2) Drive motor; (3) Disc brush conductive output device; (5) Permanent magnetic disc; (6) Generator disc; (9) Magnetism increasing coil.

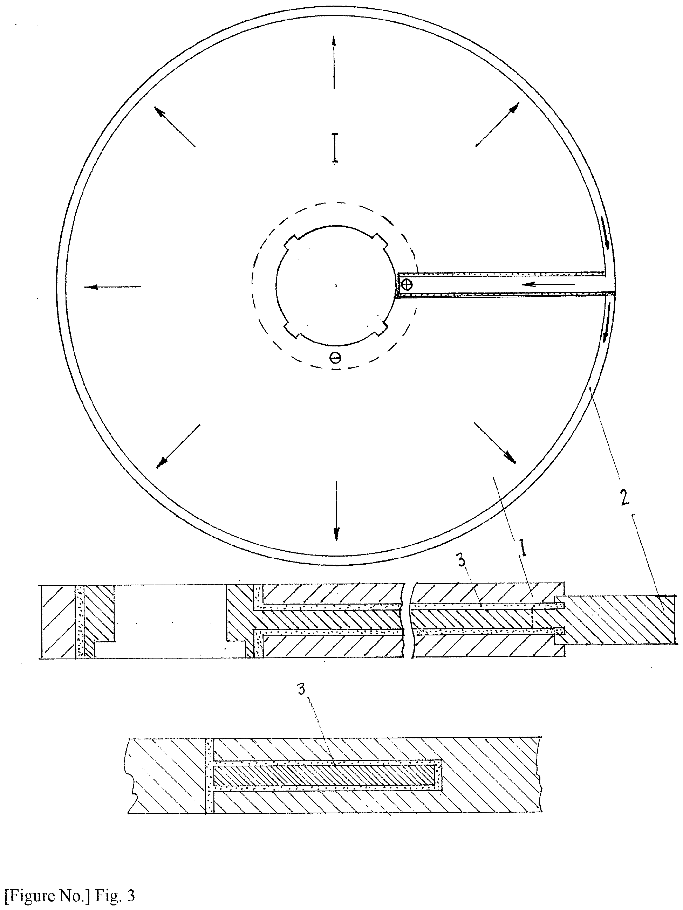

Fig. 3: Schematic Diagram of Generator and Partial Cross Section View (1) Aluminum alloy generator disc; (2) Copper alloy conductive ring; (3) Ceramic structural insulation bus; (⊕⊖) are positive and negative connecting terminals.

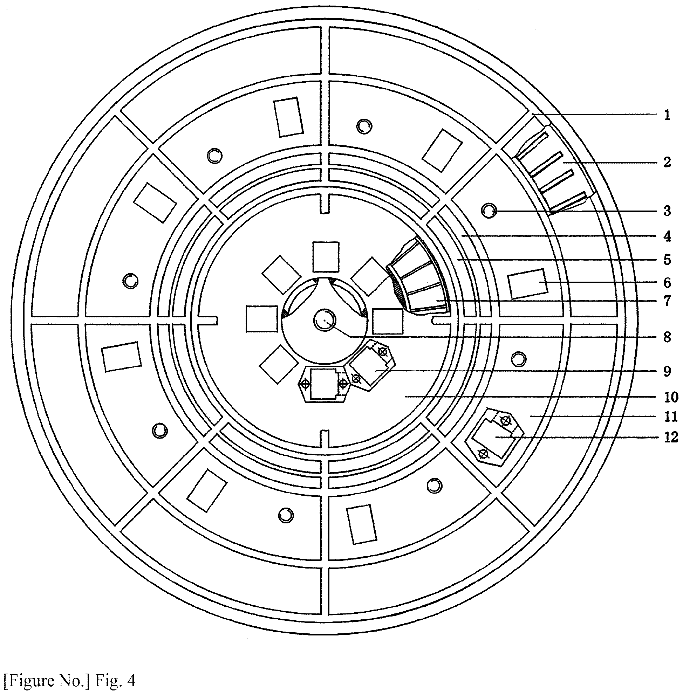

Fig. 4: Partial Cross Section View of Disc Brush Conductive Output Device (1) High intensity insulation support; (2) Negative electric brush fan; (3) Negative power output connecting terminal; (4) Negative vent; (5) Positive vent; (6) Electric brush vacancy; (7) Positive brush fan; (8) Positive power output connecting terminal; (9) Positive power output electric brush; (10) Positive conductive brush disc holder; (11) Negative conductive brush disc holder; (12) Negative power output electric brush.

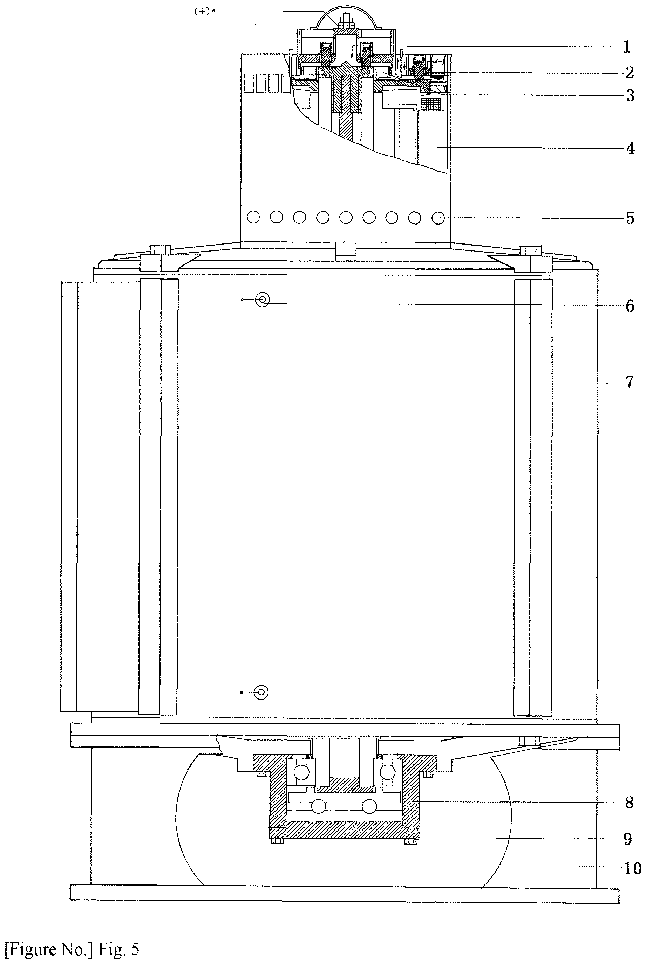

Fig. 5: (Vertical and Horizontal) Disc type Magnetism increasing DC Generator (1) Disc brush conductive output device; (2) Electric brush; (3) Fans; there are three fans in all, namely the positive fan, negative fan and motor fan; the positive fan is fixed onto the shaft head; the negative fan and the motor fan are fixed on the conductive disc connecting to the shaft; (4) Drive motor; (5) Air inlet; (6) Casing coil connecting terminal; (7) DC generator; (8) Bearing bush; (9) Access hole; (10) Vertical base.

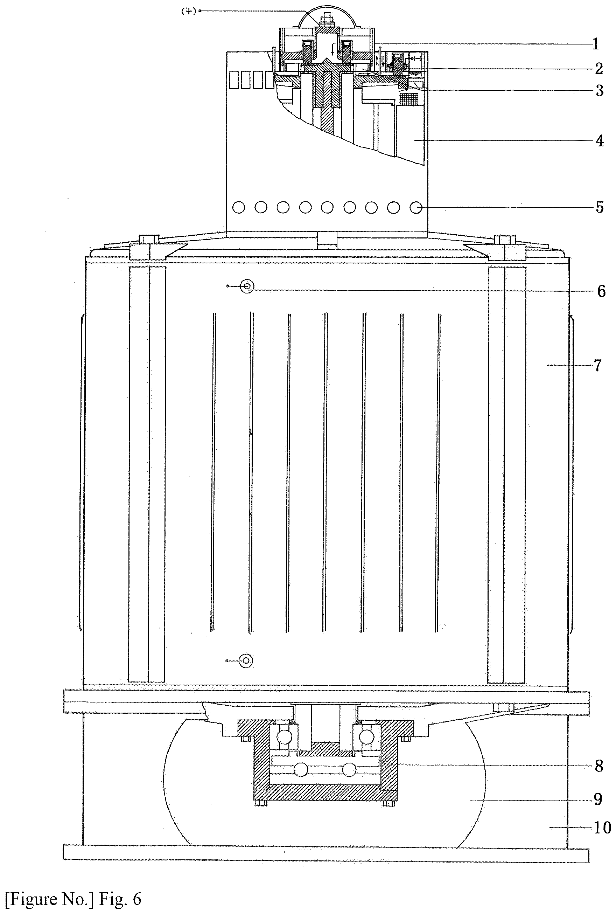

Fig. 6: (Vertical) Disc type Magnetism increasing DC Generator (1) Disc brush conductive output device; (2) Electric brush; (3) Fans: There are three fans in all, namely the positive fan, the negative fan and the motor fan; the positive fan is fixed onto the shaft head; the negative fan and the motor fan are fixed on the conductive disc connecting to the shaft; (4) Drive motor; (5) Air inlet; (6) Casing coil connecting terminal; (7) DC generator; (8) Bearing bush; (9) Access hole; (10) Vertical base.

### Detailed Implementation Method

### Implementation example 1

As shown in Fig. 1, [horizontal] disc type magnetism increasing DC generator; the device is composed of three parts: (1) DC generator: Stator: A fixed permanent magnetic source composed of a permanent magnetic disc 5 and ceramic structural insulation gasket 17, which is separated from the generator disc 6 in layers with a casing coil 9; [Casing coil is similar to a coil wound with aluminum strips or copper strips (wires), while the ceramic structural insulation is cast into the casing]; rotor: It is composed of a generator disc, (generator disc: The aluminum alloy generator disc is connected to the copper alloy conductive ring, the conductive ring is connected to the ceramic structural insulation bus; there is a positive connecting terminal on the insulation bus, where, there is a negative connecting terminal on the aluminum alloy generator disc) and ceramic structural insulation generator disc holder 7, which is separated from the permanent magnetic disc in layers, and is placed on the non-magnetic hollow conductive metal shaft 10 (there is a conductive terminal 4 inside the shaft), forming the generator disc rotor in the generator; the positive terminal of the generator disc is connected to the negative terminal of the next generator disc; these form a power generation series circuit for the generator disc; the positive terminal of the last generator disc is connected to the conductive terminal inside the shaft; the conductive terminal inside the shaft is connected to the positive conductive disc 21 in the disc brush conductive output device 3, outputting positive power from the generator via the conductive friction disk and electric brush 20; it is connected to the input terminal 13 of the casing coil, so that its output terminal 14 can output positive direct current; the negative terminal of the generator disc is connected to the non-magnetic conductive metal disc holder 8; the non-magnetic conductive metal disc holder is connected to the shaft; the shaft is connected to the negative conductive disc 22 in the disc brush conductive output device 3, outputting negative power from the generator via the conductive friction disk and electric brush; (2) Drive motor 2 (the drive motor here is a separate structure); the rotor and the generator disc rotor share the same shaft, while the bearing bush and the stator are fixed onto the DC generator end cap; (3) Disc brush conductive output device: There are positive output device and negative output device inside; it is composed of a conductive disc (the conductive disc is equipped with a conductive friction disk), electric brush 20, conductive brush disc holder and fans; it is installed on the generator shaft head; the positive conductive disc is connected to the conductive terminal inside the shaft; the negative conductive disc is connected to the shaft; the electric brush is installed on the conductive brush disc holder, and the holder is insulated and fixed onto the casing; there are connecting terminals on the conductive brush disc holder; when the drive motor rotates when it is electrified, the generator disc cuts corresponding magnetic line of force and generates current, while the current reaches the negative terminal of the next generator disc after passing the conductive ring and positive connecting terminal of the insulation bus; the generated current is output by the series circuit, after passing the conductive terminal inside the shaft and the disc brush conductive output device, is input to the input terminal of the casing coil, and the output terminal of the casing coil outputs direct current; the positive power output terminal of the casing coil and the negative power output terminal of the disc brush conductive output device, are connected to the electrical equipment; when the electrical equipment consumes power, it generates current; when the current passes the casing coil, it generates magnetic potential; the magnetic potential of the casing coil is added to the DC generator magnetic source, enhancing the magnetic field strength of the DC generator magnetic source, and enlarging the magnetic flux, thus increasing the power generation of the DC generator; such a casing coil magnetism increasing method is called (self increasing); a control device can be installed in front of the disc type magnetism increasing DC generator, to adjust the number of revolutions of the generator, V=Blu [V]; this can help adjust the output power of the disc type magnetism increasing DC generator; Magnetic potential = Coil turns x Current (A); it is necessary to ensure that the coil turns meet the design and usage requirements of the electrical equipment.

For example: Attached Fig. 1 of the instructions: 1: 10, (1) The outer diameter of the magnetic disc in the generator's permanent magnetic source is 1050 mm, the inner diameter is 280 mm, and the average area is 0.768 square meters; there are 21 permanent magnetic discs in all, and the magnetic energy area is 16 square meters; the DC generator has no backward electromagnetic force, hence, 5.5 kw or 7.5 kw motors are selected as drive motors; this can meet the operation needs of the drive DC generator; the magnetic energy area of the drive motor is 0.05 square meters; the magnetic energy area of the generator is over 300 times greater than that of the drive motor; (2) The magnetic potential generated by load is re-injected into the permanent magnetic source, which again increases the generator energy; (3) The diameter of the generator disc inside the generator disc rotor is 1050 mm, and the thickness is 15 mm to 20 mm; 20 generator discs can meet the maximum magnetic energy power generation demand of the DC generator; the DC generator operates coaxially with the drive motor, while the DC generator's power generation is over 300 times greater than the drive motor's power consumption, and the output power of the DC generator is much greater than the power consumed by the drive motor; explanation: (1) The magnetic energy area of the generator is 16 square meters; the magnetic energy area of the generator is over 300 times greater than that of the drive motor, which is about 1500 kw; this is the initial generation area of the generator; (2) Magnetic potential = Coil turns x Current (A); assuming that the magnetism increasing coil has 20 turns, and the load current is 4.5 (A) per kw; magnetic potential = load power x 4.5 (A) x 20 turns; it can be seen from it that the power generation by the magnetism increasing coil is greater than the load power consumption; the number of turns of the magnetism increasing coil can change the output power of the generator; (3) V=Blu [V], controlled by a controller, the disc type magnetism increasing DC generator steadily operates at a set value, and the output power can be changed by changing the set value; the tremendous energy inside the generator is based on the power generation area and power generation of the magnetism increasing coil; the maximum output power of the generator in Fig. 1 can exceed 1500 kw; (the generator does not violate the energy conservation law) (4) The generator in Fig. 1 does not have a backward electromagnetic force, hence, 5.5 kw or 7.5 kw motors can be used as the drive motors to meet the power generation demand of the generator in Fig. 1
(1) Fig. 2 is the summary structural diagram of disc type magnetism increasing DC generator in Fig. 1; it is composed of a DC generator 1, drive generator 2, and disc brush conductive output device 3; the permanent magnetic disc 5, generator disc 6 and magnetism increasing coil 9 are inside the DC generator.
(2) In Fig. 1, the schematic diagram of the generator disc and the partial cross section view Fig. 3; the generator disc is composed of an aluminum alloy generator disc 1, which is connected to the copper alloy conductive ring 2, and the conductive ring is connected to the insulation bus 3; the insulation bus is equipped with a positive connecting terminal, while the aluminum alloy generator disc is equipped with a negative connecting terminal; here, the aluminum has the best power generation performance, and copper has the best conductive performance; the aluminum alloy generator disc rotates and cuts the magnetic line of force, generating current, while the current is input to the insulation bus after passing the conductive ring, and is input to the negative connecting terminal of the next generator disc, by the positive connecting terminal.
(3) In Fig. 1, the disc brush conductive output device 3 (including positive output device and negative output device), is composed of conductive disc 21 and 22 (with conductive friction disk on conductive disc), electric brush 20, conductive brush disc holder, connecting terminals and fans; while the positive conductive disc 21 is connected to the conductive terminals inside the shaft, the negative conductive disc 22 is connected to the shaft, the electric brush is installed on the conductive brush disc holder, and the disc holder is fixed onto the casing by insulating support; the conductive brush disc holder is equipped with connecting terminals and 3 fans, with the positive fan installed on the shaft head, and the negative fan and motor fan installed on the negative conductive disc; when the generator rotates to generate power, the current passes through the conductive disc, electric brush, conductive brush disc holder and connecting terminals, outputting direct current; Fig. 4 Partial Cross Section View of Disc Brush Conductive Output Device.

### Implementation example 2

As shown in Fig. 5, the (vertical and horizontal) disc type magnetism increasing DC generator is made by making changes in the horizontal disc type magnetism increasing DC generator in Fig. 1; differing from the horizontal disc type magnetism increasing DC generator in Fig. 1, the vertical base 10 is installed on the negative side of the DC generator 7, while the drive motor 4 is installed on the positive side of the DC generator (The drive motor is a separate structure); the rotor is installed on the DC generator rotation shaft, and the stator is fixed on the generator end cap; the disc brush conductive output device 1 is installed on the extension of the drive motor casing; (the DC generator shaft is extended accordingly), the positive conductive disc is connected to the conductive terminals inside the shaft, and the negative conductive disc is connected to the shaft; the end cap at the bottom is thickened, to ensure the load bearing capacity of the end cap at the bottom meets usage requirements; the vertical base of the DC generator is equipped with 3 access holes (access hole 9); the rest is the same with the (horizontal) disc type magnetism increasing DC generator in Fig. 1.

### Implementation example 3

As shown in Fig. 6, the (vertical) disc type magnetism increasing DC generator is made by removing the horizontal base of the (vertical and horizontal) disc type magnetism increasing DC generator in Fig. 5.

## Claims

1. The disc type magnetism increasing DC generator is a pure magnetic DC generator composed of a drive motor, a DC generator and a disc brush conductive output device; 1) DC generator: Stator: Is a fixed permanent magnetic source in a permanent magnetic disc coil casing with a ceramic structural insulation gasket; it is separated from the generator disc in layers, with consistent magnetic field direction; the casing coil is a magnetism increasing coil, which is similar to a coil wound with aluminum strips or copper strips or wires, and is cast into a casing with a ceramic structural insulation; rotor: Is composed of a generator disc and a ceramic structural insulation generator disc holder, which is separated from the permanent magnetic disc layer by layer, and is placed on a non-magnetic hollow conductive metal shaft, with conductive terminals inside the shaft, forming the generator disc rotor in the generator, for the composition of the generator disc, the aluminum alloy generator disc is connected to the copper alloy conductive ring, and the conductive ring is connected to the ceramic structural insulation bus, with the insulation bus equipped with a positive connecting terminal, and the aluminum alloy equipped with a negative connecting terminal; the positive terminal of the generator disc is connected to the negative terminal of the next generator disc, forming a generator disc series circuit for power generation; the positive terminal of the previous generator disc is connected to the conductive terminal inside the shaft, and the conductive terminal inside the shaft is connected to the disc brush conductive output device, outputting positive power from the generator; the negative terminal of the generator disc at the bottom is connected to the non-magnetic conductive metal disc holder at the bottom, the non-magnetic conductive metal disc holder is connected to the shaft, and the shaft is connected to the disc brush conductive output device, outputting negative power from the DC generator, 2) The drive motor is a separate structure, however, its rotor shares the same shaft with the generator disc rotor, while the bearing bush and the stator are installed on the DC generator end cap, 3) Disc brush conductive output device: Includes the positive output device and the negative output device, and is composed of the conductive disc (with conductive friction disk on it), electric brush, conductive brush disc holder and fans; it is installed on the DC generator shaft head, with the positive terminal connected to the conductive terminal inside the shaft, and the negative terminal connected to the shaft, When the drive motor rotates after it is electrified, the generator disc cuts the corresponding magnetic line of force, generating current, The current passes the conductive ring, insulation bus and positive terminal, and reaches the negative terminal of the next generator disc, The generated current is output by the series circuit, and is input to the input terminal of the magnetism increasing coil after passing the conductive terminal inside the shaft and the disc brush conductive output device, and the output terminal of the magnetism increasing coil outputs direct current; the positive power output terminal of the magnetism increasing coil and the negative power output terminal of the disc brush conductive output device are connected to the electrical equipment; when the electrical equipment consumes electricity, it generates current, when the current passes the magnetism increasing coil, the magnetism increasing coil generates magnetic potential; the magnetic potential of the magnetism increasing coil is added to the DC generator's magnetic source, enhancing the magnetic field strength of the DC generator's magnetic source, and increasing the magnetic flux, which thereby increases the DC generator's power output; this magnetism increasing method of the magnetism increasing coil is called self increasing; the magnetism increasing current of the magnetism increasing coil can also be separated from the current of the electrical equipment, and a magnetism increasing current can be specially set for the magnetism increasing coil, such a magnetism increasing method is called external increasing; the power generated by the DC generator can be directly applied to the electrical equipment; if the above two magnetism increasing methods are included in one DC generator, this is called compound increasing; the magnetic potential generated by the magnetism increasing coil = Coil turns x Current (A), adjusting the magnetism increasing coil turns or current, can change the output power of the generator, while adjusting the number of revolutions of the generator, V=Blu [V], can adjust the output power of the generator; the two-way adjustment can ensure an extremely wide range of the generator's output power, from low voltage to high voltage, and can meet usage requirements of various electrical equipment, 4) Using a generator disc and permanent magnetic disc for power generation, the magnetism increasing coil increases magnetism, while the generator shaft and conductive terminal inside the shaft, output direct current, which is the key technology of disc type magnetism increasing DC generator, Disc type magnetism increasing DC generators include vertical type, horizontal type and vertical-horizontal type.

2. The disc type magnetism increasing DC generator described in 1 of Patent Claims, features a generator disc, The aluminum alloy generator disc is connected to the copper alloy conductive ring, the conductive ring is connected to the ceramic structural insulation bus, A positive connecting terminal is equipped on the insulation bus, while a negative connecting terminal is equipped on the aluminum alloy generator disc, which is used with the shaft and the ceramic structural insulation disc holder.

3. The disc type magnetism increasing DC generator described in 1 of Patent Claims, features a round hole inside the permanent magnetic disc and a projection at the center of the outer circle; it is used with the insulation gasket.

4. The disc type magnetism increasing DC generator described in 1 of Patent Claims, features a non-magnetic hollow conductive metal shaft, with a conductive terminal inside the shaft, and four raised bar keys on the outside of the shaft.

5. The disc type magnetism increasing DC generator described in 1 of Patent Claims, features a coil casing, with an insulation coil cast inside the casing.

6. The disc type magnetism increasing DC generator described in 1 of Patent Claims, features a deep groove bearing and thrust bearing inside the bearing bush, with screw holes and fastening screw holes on the base, which are used with the DC generator end cap; there is a bearing bush seat outside the DC generator end cap.

7. The disc type magnetism increasing DC generator described in 1 of Patent Claims, features a positive output device, and a negative output device inside the disc brush conductive output device; it is composed of a conductive disc (with conductive friction disk on it), electric brush, conductive brush disc holder and fans; the positive conductive disc is connected to the conductive terminal inside the shaft, the negative conductive disc is connected to the shaft, the electric brush is installed on the conductive brush disc holder, and the disc holder is fixed using the insulation support; there are connecting terminal and 3 fans on the conductive brush disc holder, with the positive fan fixed on the shaft head, while the negative fan and the motor fan are conductively fixed on the negative conductive disc.

8. The disc type magnetism increasing DC generator described in 1 of Patent Claims, features a non-magnetic conductive metal disc holder fixed on the shaft, and connected with the generator disc.

9. The disc type magnetism increasing DC generator described in 1 of Patent Claims, features an insulation disc holder fixed on the shaft, and connected with an insulated generator disc.
